# FASCICULE DE BREVET EUROPEEN

(11) **EP 1 711 065 B1**
(45) Date de publication et mention de la délivrance du brevet: **23.02.2011**
(21) Numéro de dépôt: 04816442.0
(22) Date de dépôt: 20.12.2004
(51) Int. Cl.: A23C 9/123, A23L 1/03, A23L 1/00, A23C 11/10

(54) **PRODUIT ALIMENTAIRE LIQUIDE COMPRENANT DES GRANULES DE BACTERIES LACTIQUES**
NAHRUNGSMITTELPRODUKT, DAS MILCHSÄUREBAKTERIENGRANULAT ENTHÄLT
FOOD PRODUCT CONTAINING LACTIC BACTERIA GRANULES

(30) Priorité: 23.12.2003 FR 0315243
(43) Date de publication de la demande: 18.10.2006
(73) Titulaire: Compagnie Gervais Danone, 75009 Paris (FR)
(72) Inventeur: TEISSIER, Philippe, F-91300 Massy (FR)
(74) Mandataire: Orès, Bernard
(86) Numéro de dépôt international: PCT/FR2004/003309
(87) Numéro de publication internationale: WO 2005/070221

(56) Documents cités:
- WO-A-96/08261
- WO-A-99/09839
- US-A- 5 292 657
- US-A- 5 952 021
- US-A1- 2003 109 025
- US-B1- 6 447 823

## Description

La présente Invention est relative à un produit alimentaire liquide et aqueux comprenant des particules de bactéries lactiques déshydratées et enrobées de matière grasse végétale.

Les probiotiques sont des microorganismes vivants qui améliorent l'équilibre microbien intestinal. Actuellement, différents microorganismes tels que par exemple les levures, les bactéries et en particulier les bifidobactéries, les lactobacilles, les leuconostoques, les pédiocoques et les lactocoques peuvent être utilisés en tant que probiotiques, en particulier dans le domaine agro-alimentaire. Dans l'alimentation humaine, ces microorganismes ou probiotiques sont principalement incorporés dans des produits laitiers fermentés tels que les yaourts.

Les microorganismes qui sont incorporés dans les produits alimentaires subissent un certain nombre d'agressions au cours de leur fabrication, de leur stockage et de leur utilisation, ce qui conduit à une diminution de leur efficacité qui est le plus souvent associée à un taux de mortalité important.

C'est ainsi que les produits alimentaires disponibles sur le marché semblent ne pas pouvoir apporter à leurs consommateurs un nombre suffisant de probiotiques pour permettre d'obtenir un effet santé conséquent, en raison notamment de leur faible résistance au stockage ou aux différents stress lors de leur mise en oeuvre dans des produits ou lors de leur consommation (stress gastrique, stress intestinal).

Diverses solutions visant à protéger ces microorganismes pour assurer à la fois leur conservation dans le produit fini et leur efficacité lors de l'ingestion du produit par le consommateur ont déjà été proposées, dont leur mélange ou leur encapsulation avec des matières grasses.

C'est ainsi que la demande de brevet européen EP 1 010 372 décrit un aliment cuit comprenant à la fois un probiotique et un prébiotique c'est-à-dire un ingrédient non vivant non digestible qui augmente l'activité de certaines bactéries dont les bactéries probiotiques dans le colon. Cet aliment est composé d'une partie grasse non cuite dépourvue d'eau et contenant des bactéries vivantes lyophilisées et d'une partie cuite constituée par des prébiotiques de type fibres non digestibles. La partie grasse renfermant les bactéries lyophilisées est constituée d'huile de palme, d'huile de noix de coco, de beurres végétaux de type cacao ou cacahuètes, de margarines, d'huiles végétales hydrogénées ou partiellement hydrogénées. L'aliment ainsi obtenu est donc de type biscuit et peut être conservé au moins six mois à température ambiante.

La demande internationale WO 99/09839 décrit une composition de type pâte qui comprend une matière grasse anhydre ou un substitut de matière grasse et un probiotique à une concentration allant de 1.10⁷ à 5.10¹¹ UFC (Unités Formant Colonies)/g de probiotique. La composition présente une activité en eau (aw) inférieure à 0,7 et peut être utilisée pour la fabrication de produits alimentaires secs de type biscuits. Cette composition permet de conserver pendant plusieurs mois à température ambiante un nombre important et constant de probiotiques ainsi que leurs propriétés dans le produit fini.

Par ailleurs, la demande internationale WO 01/68808 décrit des particules de microorganismes vivants déshydratés et enrobés par une couche homogène d'une substance hydrophobe choisie parmi les matières grasses ainsi que leur procédé de fabrication (granulation) et leur application dans la fabrication de produits pharmaceutiques, diététiques ou alimentaires. La granulation des bactéries vivantes permet d'augmenter leur résistance vis-à-vis des stress physico-chimiques qu'elles subissent au cours de leur granulation et suite à leur ingestion. L'utilisation de ces particules dans le domaine agro-alimentaire est brièvement décrite et les produits alimentaires qui sont cités en exemple sont des céréales, des produits de confiserie ou du lait en poudre.

Enfin, la demande internationale WO 96/08261 décrit une composition probiotique comprenant un ou plusieurs microorganismes probiotiques qui peuvent être utilisés sous forme lyophilisée et un support comprenant de l'amidon résistant modifié ou non modifié ou leurs mélanges, ledit support agissant en tant que transporteur et en tant que milieu de maintien et de croissance desdits microorganismes dans le grand intestin et d'autres régions du tractus gastro-intestinal. Les microorganismes lyophilisés sont mélangés avec une matière grasse à faible point de fusion préalablement chauffée puis l'amidon résistant est ajouté à la dispersion obtenue. Une telle composition probiotique peut être ingérée directement ou incorporée dans des aliments et des boissons, en particulier des yaourts, des jus, etc.

Outre le choix de la ou des substances qui peuvent être utilisées à titre de matières protectrices, les procédés d'enrobage doivent également surmonter un certain nombre de difficultés dont notamment l'impératif de concilier des procédés de fabrication agressifs avec l'utilisation d'entités biologiques fragiles.

De plus, les microorganismes une fois enrobés doivent être résistants aux conditions de stockage, d'utilisation ou de mise en oeuvre dans les produits finis, tout en étant relargués chez l'hôte au plus tard au niveau du colon. Par exemple, les probiotiques qui possèdent une activité intestinale doivent certes être protégés tout au long de leur stockage mais également durant leur trajet gastro-intestinal (résistance à l'acidité gastrique par exemple), afin d'optimiser leur efficacité lors de leur utilisation. De plus, lors de leur mise en oeuvre dans le produit et tout au long de leur stockage, l'intégrité des granules doit être préservée afin d'assurer le maintien du niveau de survie des bactéries dans les granules.

Ainsi, les différents procédés de protection et notamment d'encapsulation décrits dans les documents de l'art antérieur cités précédemment sont particulièrement bien adaptés à l'incorporation de probiotiques dans des produits alimentaires secs ou présentant une très faible activité en eau.

Par ailleurs, le brevet américain US 6,447,823 décrit un yaourt liquide contenant des bactéries lactiques encapsulées à l'aide d'un mélange d'huile durcie et d'amidon, et comportant éventuellement une seconde couche constituée de gélatine et de pectine. La taille des capsules ainsi obtenues étant relativement importante (1 à 3 mm), la fabrication de ce type de yaourt nécessite la mise en oeuvre d'un procédé spécifique d'ajout des capsules dans le produit. En effet, il est nécessaire de placer les capsules au fond de la bouteille de conditionnement préalablement au remplissage progressif dudit flacon avec le yaourt liquide qui doit avoir une densité très proche de celle des capsules, de façon à ce que ces dernières se répartissent uniformément dans le produit. La production d'un tel produit impose donc une contrainte importante de fabrication du fait de la taille des particules qui rend impossible la réalisation d'un mélange dynamique des capsules.

Ainsi, la dispersion de granules de taille trop importante apparaît difficile et celles-ci s'avèrent être instables dans un environnement aqueux, compte tenu de leur caractère lipophile. Ainsi, les produits alimentaires très aqueux ne constituent pas un milieu idéal pour assurer la stabilité de granules lipophiles contenant des ferments.

Par ailleurs, lorsque l'on souhaite incorporer des particules de bactéries enrobées de matières grasses végétales dans un produit alimentaire très liquide, il est impératif que la taille des granules ne soit pas trop importante afin de ne pas être perceptibles en bouche (sensation de grains de sable sous le palais) pour pouvoir fournir un produit acceptable d'un point de vue organoleptique. Enfin, compte tenu de la faible quantité de bactéries contenue dans chaque capsule, la quantité de capsules à disperser dans le liquide pour fabriquer un produit alimentaire à effet probiotique serait trop importante et conduirait à l'obtention d'un produit inacceptable d'un point de vue organoleptique.

C'est donc afin de remédier à l'ensemble de ces problèmes majeurs que les Inventeurs ont mis au point ce qui fait l'objet de l'Invention.

Ils se sont notamment donnés pour but de pourvoir à un produit alimentaire liquide et très aqueux et renfermant des bactéries lactiques enrobées à l'aide d'au moins une matière grasse végétale, dans lequel la survie de ces probiotiques est significativement augmentée dans le produit fini comparé aux produits actuellement disponibles sur le marché.

La présente Invention a donc pour objet un produit alimentaire liquide contenant des particules de bactéries lactiques déshydratées enrobées d'au moins une matière grasse végétale solide à température ambiante, caractérisé par le fait que lesdites bactéries enrobées se présentent sous la forme de granules de taille moyenne comprise entre 95 et 300 µm renfermant des bactéries lactiques en une quantité supérieure ou égale à 1.10¹⁰ UFC par gramme de granules, que lesdits granules sont exempts d'amidon, et que ledit produit alimentaire présente un pH inférieur ou égal à 4,5 et une teneur pondérale en eau d'au moins 83 %.

Les Inventeurs ont en effet mis en évidence que malgré l'acidité importante du produit alimentaire conforme à l'Invention, l'enrobage des bactéries probiotiques présente l'avantage de maintenir un niveau élevé de survie des microorganismes incorporés dans les produits et lors de sa consommation chez l'hôte en les protégeant à la fois de l'humidité et de l'oxygène dans le produit et en augmentant leur résistance aux sucs gastriques et intestinaux chez l'hôte tout en assurant leur relargage au plus tard au niveau du colon. De plus, il n'est pas nécessaire d'incorporer de l'amidon en tant que support nutritionnel pour les bactéries probiotiques ou en tant que support additionnel permettant d'améliorer la dispersion de la matière grasse, contrairement à ce qui est décrit dans l'art antérieur et notamment dans la demande internationale WO 96/08261.

Enfin, comparé au produit alimentaire décrit dans le brevet américain n° 6,447,823, il n'est pas obligatoirement nécessaire d'adapter la texture du produit alimentaire en fonction des granules de probiotiques à incorporer et il est possible de réaliser un mélange dynamique des granules avec le produit, la taille des granules permettant une dispersion aisée de celles-ci dans le liquide, afin de conditionner directement le produit final.

Par ailleurs, les Inventeurs se sont aperçus que la mise en oeuvre de granules dont la taille serait supérieure à 300 µm entraînerait des problèmes de dispersion dans le produit alimentaire mais également de perception des granules lors la consommation du produit fini ce qui serait inacceptable d'un point de vue organoleptique. D'autre part, la mise en oeuvre de particules contenant un nombre important de bactéries lactiques déshydratées tout en ayant un diamètre inférieur à 95 µm serait difficilement réalisable d'un point de vue technique.

Selon une forme de réalisation avantageuse de la présente Invention, la taille moyenne des granules de particules de bactéries lactiques est inférieure à 200 µm environ, et de façon plus avantageuse encore, cette taille est comprise entre 150 et 200 µm environ.

Parmi les produits alimentaires liquides conformes à la présente Invention, on peut notamment citer le lait fermenté, les boissons comme les jus de fruits, les mélanges de lait et de jus de fruits tels que par exemple les produits vendus sous la marque Danao® et les jus végétaux tels que par exemple le jus de soja et le jus d'avoine.

Les bactéries lactiques utilisées dans le produit alimentaire selon la présente Invention sont de préférence choisies parmi les laclobacilles et les bifidobactéries, au sein desquels *Lactobacillus casei, Lactobacillus plantarum, Bifidobacterium animalis et Bifidobacterium breve* sont tout particulièrement préférés.

Selon un mode de réalisation avantageux de la présente Invention, les bactéries lactiques préférées sont choisies parmi les souches suivantes : *Lactobacillus plantarum* déposée le 16 mars 1995 sous le numéro DSM 9843 auprès de la Deutsche Sammlung von Mikroorganismen und Zellkulturen GmbH, Braunschweig, Allemagne; *Lactobacillus casei* déposée le 28 septembre 1994 sous le numéro 1-1518, *Bifidobacterium animalis* déposée le 20 mai 2000 sous numéro 1-2494 et *Bifidobacterium breve* déposée le 31 mai 1995 sous le numéro I- 2219, ces trois dernière souches ayant été déposées auprès de la CNCM (Collection Nationale de Cultures de Microorganismes) tenue par l'Institut Pasteur, 25 rue du Docteur Roux, à Paris.

Ainsi que cela a été exposé précédemment, une des caractéristiques du produit conforme à l'Invention est que les bactéries lactiques utilisées sont déshydratées préalablement à leur granulation. Les techniques de déshydratation qui peuvent être utilisées à cet effet pour mettre en oeuvre l'invention sont tout à fait conventionnelles et bien connues de l'art antérieur. Parmi de telles techniques, on peut notamment citer la déshydratation sur lit d'air fluidisé (LAF) et la lyophilisation.

Selon un mode de réalisation particulièrement préféré de l'Invention, les bactéries lactiques sont déshydratées par lyophilisation préalablement à leur granulation. Dans ce cas, les bactéries sont préférentiellement traitées à l'aide d'un agent lyoprotecteur préalablement à leur lyophilisation. Dans ce cas, de tels agents lyoprotecteurs, sont notamment choisis parmi la maltodextrine, le saccharose, l'ascorbate de sodium et la poudre de lait.

Selon une forme de réalisation particulièrement préférée de l'Invention, les bactéries sont déshydratées directement après leur croissance dans un milieu de culture approprié.

La taille moyenne des particules de bactéries déshydratées (avant leur granulation) est de préférence comprise entre 80 et 150 µm environ. A cet égard, la taille des particules de bactéries déshydratées peut éventuellement être ajustée par exemple par broyage selon les techniques conventionnelles bien connues de l'homme de l'art.

Les particules de bactéries déshydratées pouvant être utilisées dans le cadre de l'Invention présentent par ailleurs de préférence une activité en eau inférieure à 0,25 et encore plus préférentiellement comprise entre 0,03 et 0,2.

Le procédé de granulation utilisé pour l'enrobage des particules de bactéries lactiques déshydratées avec la matière grasse végétale doit à la fois permettre de préparer des granules efficacement protectrices des bactéries à enrober sans entraîner une dégradation desdites bactéries durant la fabrication des granules.

Ces deux objectifs sont notamment atteints par la mise en oeuvre du procédé de production tel que décrit dans la demande internationale WO 01/68808. Les Inventeurs ont en effet découvert de façon surprenante que ce procédé de granulation peut être utilisé pour la fabrication de granules de bactéries lactiques déshydratées, granules qui peuvent ensuite être utilisées afin de préparer le produit alimentaire conforme à la présente Invention.

Parmi les matières grasses végétales pouvant être utilisées pour enrober les particules de bactéries déshydratées selon la présente Invention, on peut notamment citer les corps hydrogénés et non hydrogénés, fractionnés ou non fractionnés, estérifiés ou non estérifiés, tels que l'huile de palme stéarique de température de fusion (TF) = 35°C, les huiles de palme de TF 45°C et 58°C, le beurre de cacao, le beurre de cacahuètes, l'huile de palmiste, le coprah hydrogéné de TF = 32°C, les cires alimentaires qui sont des mélanges complexes d'esters d'acides gras et d'alcools gras à longues chaînes telles que la cire de carnauba (TF = 80-85°C), la cire microcristalline d'origine pétrolière, les acides gras tels que les acides stéarique et palmitique, et leurs mélanges.

Selon une forme de réalisation préférée de la présente Invention, et parmi les matières grasses végétales listées ci-dessus, celles qui possèdent un point de fusion supérieur à 40°C environ sont particulièrement préférées.

Par ailleurs, lorsque lesdites matières grasses végétales sont utilisées en mélange, alors ledit mélange comprend de préférence plus de 50 % en poids d'acides gras saturés par rapport au poids total des matières grasses entrant dans la composition dudit mélange.

La concentration en bactéries lactiques déshydratées au sein des granules est de préférence supérieure ou égale à 1.10¹⁰ UFC par gramme de granules, et au maximum de 5.10¹¹ UFC par gramme de granules.

L'activité en eau des granules de particules de bactéries lactiques déshydratées utilisées dans le cadre de la présente Invention est de préférence inférieure à 0,4 et encore plus préférentiellement comprise entre 0,1 et 0 2.

Selon une forme de réalisation préférée de l'Invention, la ou les matières grasses représentent de 40 à 75 % en poids environ et encore plus préférentiellement 60 % en poids environ, par rapport au poids total des granules. Par conséquent, et à titre d'exemple on peut notamment considérer qu'une granule peut être constituée de 60 % en poids environ de matières grasses végétales et de 40 % en poids environ de particules de bactéries lactiques déshydratées.

Au sein du produit alimentaire liquide conforme à la présente Invention, la concentration en bactéries lactiques enrobées est de préférence comprise entre 5.10⁶ et 5.10⁹ UFC par gramme de produit fini, et encore plus préférentiellement cette concentration est supérieure ou égale à 1.10⁷ UFC par gramme de produit fini.

Selon un mode de réalisation particulièrement préféré de la présente Invention, le produit alimentaire liquide contient au moins 90 % d'eau. Parmi de tels produits, et à la différence des produits que l'on qualifie de yaourts car ils renferment moins de 90 % d'eau, on peut notamment citer les produits fermentés semi-texturés et les boissons.

La quantité de granules de particules de bactéries lactiques déshydratées au sein du produit alimentaire liquide conforme à l'Invention est de préférence inférieure à 2 % en poids environ par rapport au poids total de produit alimentaire fini, et encore plus préférentiellement comprise entre 0,01 et 1 % en poids environ.

La consommation d'un produit alimentaire liquide conforme à la présente Invention permet d'obtenir un effet probiotique dans la mesure où la quantité de bactéries lactiques ingérées et qui se retrouve finalement présentes chez l'hôte est au moins égale à 3.10⁶ UFC par gramme de produit alimentaire ingéré.

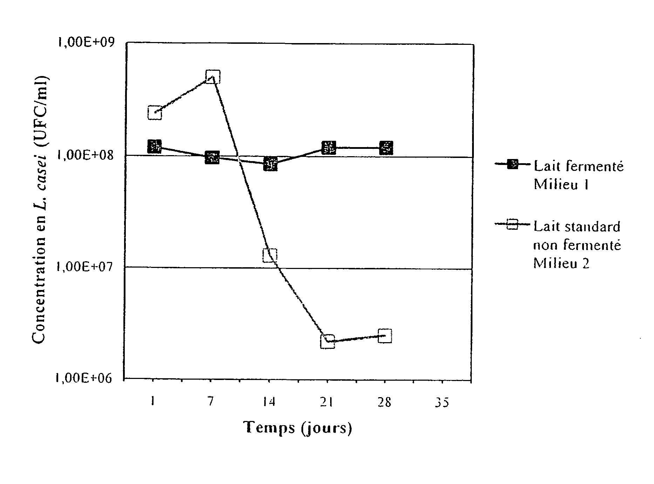

Outre les dispositions qui précèdent, l'Invention comprend encore d'autres dispositions qui ressortiront de la description qui va suivre, qui se réfère à deux exemples de préparation d'un produit alimentaire laitier fermenté, à un exemple de préparation d'un produit alimentaire de type jus de fruits, à un exemple de préparation d'un produit alimentaire de type jus végétal, à un exemple de préparation d'un produit alimentaire de type jus de fruits/jus végétal, et à une étude comparative de l'effet du pH sur l'évolution d'un lait standard présentant un pH supérieur à 4,5 et d'un lait fermenté présentant un pH inférieur à 4,5 renfermant tous les deux des granules de bactéries lactiques, ainsi qu'à la figure 1 annexée sur laquelle on peut observer l'évolution de la quantité de bactéries *L. casei* en fonction du temps dans deux laits présentant des pH différents (milieu 1 : lait fermenté de pH inférieur à 4,5 et milieu 2 : lait standard de pH supérieur à 4,5).

### EXEMPLE 1 : PREPARATION D'UN PRODUIT LAITIER FERMENTE CONFORME A L'INVENTION

### 1) Préparation de particules de bactéries lactiques déshydratées

La souche de *L. casei* 1- 1518 a été cultivée pendant 15 heures à une température de 37°C sur un milieu de culture de type Man Rogosa Sharpe (MRS) préalablement à sa lyophilisation pendant 66 heures. Les caractéristiques du lyophilisat sont les suivantes :
- Humidité : 2 % (mesurée à l'aide d'un dessiccateur de type Sartorius® commercialisé par la société Sartorius) ;
- Aw : 0,1 mesurée au Novasina® commercialisé par la société Novasina ;
- Granulométrie : 80 microns
- Population : 1,7.10¹¹ UFC/g de particules lyophilisées.

### 2) Préparation des granules de bactéries lactiques déshydratées

Les particules de bactéries lyophilisées ainsi obtenues ci-dessus à l'étape 1) sont ensuite enrobées sur lit fluidisé dans un mélange 50/50 d'acide stéarique et palmitique (% p/p) selon le procédé décrit à l'exemple 2 de la demande internationale WO 01/68808.

Le taux d'enrobage (% de matières grasses par rapport au poids total des granules) était de 60 %.

Les caractéristiques finales des granules ainsi produites étaient les suivantes:
- Humidité : 2 %
- Granulométrie : 200 microns
- Population : 1.10¹¹ UFC/g de granules

La population des bactéries lactiques au sein des granules a été stable pendant au moins 3 mois à température ambiante à l'abri de la lumière et de l'humidité.

### 3) Préparation du produit laitier fermenté

Les granules obtenues ci-dessus à l'étape 2) ont été introduites dans un lait préalablement fermenté par un mélange de *Lactobacillus bulgaricus* (5 % en nombre) et de *Streptococcus thermophilus* (95 % en nombre), à raison de 0,1 % en poids de granules par gramme de lait. Le produit laitier fermenté ainsi obtenu est ensuite réparti en pots de 200 ml.

Le produit laitier fennenté a une teneur en protéines de 2,5 % en poids ce qui lui permet de rester liquide à pH 4,2. La population en *L. bulgaricus* et en *S. thermophi*/*us* est d'environ 1.10⁹ UFC/ml de produit. La concentration en *L. casei* sous forme enrobée était de 10⁸ CFU/g de produit laitier fermenté.

La quantité de bactéries *L. casei* par ml de produit laitier en fonction du temps a été déterminée selon une méthode de numération sur milieu de culture Oxgall adapté. Cette étude montre que l'étape de granulation des particules de bactéries lactique n'a pas eu de conséquence négative sur la survie des bactéries lactiques dans le produit fini et ce pendant au moins 35 jours.

De la même façon, les quantités de *L. bu*/*garicus* et de *S*. *thermophilus* présentes dans le produit laitier fermenté en fonction du temps ont également été déterminées de façon parallèle. Les résultats obtenus (non représentés) démontrent que la présence de bactéries *L. casei* enrobées sous forme de granules de matières grasses dans le produit fini n'a pas d'impact négatif sur les autres populations de ferments présentes sous forme non enrobée dans ce produit.

Les résultats des tests organoleptiques réalisés avec un panel de 10 dégustateurs montrent par ailleurs que ce produit est jugé très proche (astringence, goût sucré, perception des particules, texture, mauvais goût et acidité) d'un produit laitier fermenté comparatif ne faisant pas partie de l'Invention et contenant la même quantité de bactéries de *L. bulgaricus* et de *S*. *thermophilus* ainsi que la même quantité de *L. casei* sous forme non enrobée. Par ailleurs, il est important de noter que le produit laitier fermenté conforme à l'Invention n'a développé aucun mauvais goût jusqu'à la fin de la DLC (date limite de consommation) du produit ce qui prouve que les matières grasses utilisées pour la préparation des granules n'ont subi aucune oxydation (pas de rancissement).

### EXEMPLE 2 : PREPARATION D'UN PRODUIT ALIMENTAIRE CONFORME A L'INVENTION : LAIT FERMENTE

1 % en poids de granules de *L. casei* fabriquées selon l'exemple 1 ci-dessus a été introduit dans un lait brassé préalablement fermenté pendant 10 heures à 37°C par les souches *L. bulgaricus, S. thermophilus et L. casei* (sous forme non enrobée).

Le lait fermenté a ensuite été réparti en pots de 200 ml.

La population en *L. bulgaricus, S. thermophilus* et *L. casei* (sous forme non enrobée) est supérieure à 1.10⁷ UFC/ml de produit.

La quantité mesurée de *L. casei* sous forme de granules était de 10⁹ CFU/g de produit fini.

Une étude de l'évolution de la quantité de bactéries *L. casei* par ml de produit fini en fonction du temps a ensuite été réalisée. Les résultats obtenus (non représentés) montrent que l'étape de granulation ne diminue pas la survie des bactéries lactiques dans le produit fini pendant au moins 35 jours.

De plus, une étude similaire réalisée sur les populations de bactéries *L. bulgaricus, S. Thermophilus, L. casei* (sous forme non enrobée) démontre que la présence de bactéries *L. casei* enrobées n'a pas d'impact négatif sur les autres populations de ferments présentes dans le produit fini.

Tout comme à l'exemple 1, les résultats des tests organoleptiques réalisés avec un panel de 10 dégustateurs montrent par ailleurs que le produit conforme à l'Invention a été jugé très proche (mêmes critères que dans l'exemple 1 ci-dessus) du produit comparatif de référence, c'est-à-dire en tout point identique au produit conforme à l'Invention à la différence près qu'il ne comportait que des bactéries sous forme non enrobée. Enfin, et tout comme à l'exemple 1 ci-dessus, le produit conforme à l'Invention n'a développé aucun mauvais goût jusqu'à la fin de la DLC.

### EXEMPLE 3 : PREPARATION D'UN PRODUIT ALIMENTAIRE CONFORME A L'INVENTION: JUS DE FRUITS

Des granules de *L. casei* fabriquées selon l'exemple 1 ci-dessus sont introduites à raison de 0,1 % en poids par litre de jus d'orange à pH 3,5 (pur jus d'orange) pour conduire à un jus de fruit renfermant 10⁸ CFU de *L. casei* enrobés par gramme de jus de fruit.

L'étude de la l'évolution de la quantité de *L. casei* par ml de produit fini en fonction du temps montre que la granulation des bactéries lactiques ne diminue pas leur survie dans le produit fini pendant au moins 30 jours.

Les résultats des tests organoleptiques réalisés par un panel de 10 dégustateurs montrent par ailleurs que le jus de fruit conforme à l'Invention est très proche (présence de faux goût, goût sucré, texture et acidité) d'un jus de fruit standard comparatif renfermant la même quantité de bactéries lactiques sous forme non enrobée. Enfin, le jus de fruit conforme à l'Invention n'a développé aucun mauvais goût jusqu'à la fin de la DLC, ce qui indique que les matières grasses utilisées pour l'enrobage des bactéries ne subissent aucun rancissement.

### EXEMPLE 4 : PREPARATION D'UN PRODUIT ALIMENTAIRE CONFORME A L'INVENTION: MELANGE DE JUS DE FRUITS ET DE JUS VEGETAL

On introduit 0,1 % de granules de *L. casei* telles que préparées ci-dessus à l'exemple 1 dans un produit liquide fermenté composé de 89,9 % de pur jus d'orange et de 10,1 % de jus de soja fermenté *par L. bulgaricus et, S. Thermophilus.*

La concentration de particules de bactéries lactiques enrobées était de 10⁸ CFU/g dans le produit fini.

L'étude de l'évolution de la quantité de bactéries par ml de produit fini en fonction du temps a montré (résultats non représentés) que l'étape de granulation des bactéries ne diminue pas leur survie dans le produit fini pendant au moins 30 jours.

Les résultats des tests organoleptiques réalisés avec un panel de 10 dégustateurs ont par ailleurs montré que le produit a été jugé très proche (présence de mauvais goût, texture, perception des particules, acidité et astringence) d'un jus fermenté comparatif standard renfermant la même quantité de bactéries *L. casei* sous forme non enrobée et qu'il ne développe pas de mauvais goût jusqu'à la fin de la DLC.

Des résultats identiques ont été obtenus en associant du jus d'avoine fermenté ou du lait fermenté à des jus de fruits.

### EXEMPLE 5 : ETUDE COMPARATIVE DE L'EFFET DU pH : INTRODUCTION DE GRANULES DE BACTERIES DANS UN LAIT STANDARD ET DANS UN LAIT FERMENTE

Des granules de bactéries lactiques *L. casei* à 1.10¹¹ CFU/g de granules, telles que préparées à l'exemple 1 ci-dessus, ont été introduites dans deux milieux de pH différent, à savoir un lait préalablement fermenté par *L. bulgaricus, S. Thermophilus* (Milieu 1) et un lait standard non fermenté (Milieu 2), à raison de 1 % en poids.

Le pH du milieu 1 était de 4,5 et celui du milieu 2 était de 6,5.

Les milieux 1 et 2 ont ensuite été répartis en pots stériles de 200 ml.

La quantité de bactéries lactiques enrobées était de 10⁸ CFU/g dans chaque pot.

L'étude de l'évolution de la quantité de bactéries par ml de produit fini en fonction du temps est représentée sur la figure 1 annexée sur laquelle la concentration en *L. casei* exprimée en UFC/ml de lait pour chacun des deux milieux (milieu 1 : carrés pleins, milieu 2 : carrés vides) en fonction du temps en jours montre que le produit correspondant au milieu 2 évolue différemment de celui correspondant au milieu 1. On constate notamment une diminution très importante et très rapide de la quantité de bactéries lactiques *L. casei* dans le milieu 2 alors que cette quantité reste constante dans le milieu 1 conforme à l'Invention.

Par ailleurs, au bout de 12 jours de conservation à une température de 12°C, le produit correspondant au milieu 2 commence à fermenter et à gonfler en raison du développement d'une flore hétérogène dans le lait.

Par contre, aucune fermentation ne survient dans le produit correspondant au milieu 1 conforme à l'Invention, c'est-à-dire présentant un pH inférieur à 4,5.

Par ailleurs, les résultats des tests organoleptiques réalisés avec un pane de 10 dégustateurs ont montré que le produit correspondant au milieu 1 est très proche (astringence, goût sucré, perception des particules, texture, mauvais goût et acidité) d'un produit comparatif standard à base de lait fermenté et renfermant la même quantité de bactéries *L. casei* que dans le produit préparé avec le milieu 1 mais sous forme non enrobée et qu'il ne développe pas de mauvais goût jusqu'à la fin de la DLC du produit.

En revanche, le produit correspondant au milieu 2 s'est avéré être non consommable en raison du développement d'une flore de surface au bout de 21 jours ayant entraîné un gonflement du pot. L'examen visuel révèle un produit très déphasé et d'aspect rédhibitoire.

Par conséquent, l'ensemble de ces résultats montre non seulement que des conditions de pH inférieures à 4,5 ne nuisent pas à la conservation des granules de bactéries lactiques dans un produit fini mais qu'au contraire ces conditions de pH sont nécessaires à la bonne conservation du produit jusqu'à la fin de sa DLC.

## Revendications

1. Produit alimentaire liquide contenant des particules de bactéries lactiques déshydratées enrobées d'au moins une matière grasse végétale solide à température ambiante, **caractérisé par le fait que** lesdites bactéries enrobées se présentent sous la forme de granules de taille moyenne comprise entre 95 et 300 µm renfermant des bactéries lactiques en une quantité supérieure ou égale à 1.10¹⁰ UFC par gramme de granules, que lesdits granules sont exempts d'amidon, et que ledit produit alimentaire présente un pH inférieur ou égal à 4,5 et une teneur pondérale en eau d'au moins 83 %.

2. Produit alimentaire selon la revendication 1, **caractérisé par le fait que** la taille moyenne des granules de particules de bactéries lactiques est inférieure à 200 µm.

3. Produit alimentaire selon la revendication 1 ou 2, **caractérisé par le fait que** la taille moyenne des granules de particules de bactéries lactiques est comprise entre 150 et 200 µm.

4. Produit alimentaire selon l'une quelconque des revendications précédentes, **caractérisé par le fait qu'**il se présente sous la forme d'un lait fermenté ou d'une boisson.

5. Produit alimentaire selon la revendication 4, **caractérisé par le fait que** la boisson est un jus de fruits, un mélange de lait et de jus de fruit ou un jus végétal.

6. Produit alimentaire selon l'une quelconque des revendications précédentes, **caractérisé par le fait que** les bactéries lactiques sont choisies parmi les lactobacilles et les bifidobactéries.

7. Produit alimentaire selon la revendication 6, **caractérisé par le fait que** les bactéries lactiques sont choisies parmi *Lactobacillus casei. Laclobacillus plantarum, Bifidobacterium animalis et Bifidobaclerium breve.*

8. Produit alimentaire selon la revendication 7, **caractérisé par le fait que** la bactérie lactique est un *Lactobacillus casei* I-1518.

9. Produit alimentaire selon l'une quelconque des revendications précédentes, **caractérisé par le fait que** les bactéries lactiques sont déshydratées par lyophilisation préalablement à leur granulation.

10. Produit alimentaire selon la revendication 9, **caractérisé par le fait que** les bactéries sont traitées à l'aide d'un agent lyoprotecteur préalablement à leur lyophilisation.

11. Produit alimentaire selon l'une quelconque des revendications précédentes, **caractérisé par le fait que** les particules de bactéries déshydratées présentent une taille moyenne comprise entre 80 et 150 µm.

12. Produit alimentaire selon l'une quelconque des revendications précédentes, **caractérisé par le fait que** les particules de bactéries déshydratées présentent une activité en eau inférieure à 0,25.

13. Produit alimentaire selon l'une quelconque des revendications précédentes, **caractérisé par le fait que** les matières grasses végétales utilisées pour enrober les particules de bactéries déshydratées sont choisies parmi les corps hydrogénés et non hydrogénés, fractionnés ou non fractionnés, estérifiés ou non estérifiés, les cires alimentaires, les acides gras et leurs mélanges.

14. Produit alimentaire selon la revendication 13, **caractérisé par le fait que** les matières grasses végétales sont choisies parmi l'huile de palme stéarique de température de fusion (TF) = 35°C, les huiles de palme de TF 45°C et 58°C, le beurre de cacao, le beurre de cacahuètes, l'huile de palmiste, le coprah hydrogéné de TF = 32°C, la cire de carnauba de TF = 80-85°C, la cire microcristalline d'origine pétrolière, l'acide stéarique, l'acide palmitique, et leurs mélanges.

15. Produit alimentaire selon la revendication 14, **caractérisé par le fait que** les matières grasses végétales utilisées pour enrober les particules de bactéries déshydratées sont choisies parmi celles qui possèdent un point de fusion supérieur à 40°C.

16. Produit alimentaire selon l'une quelconque des revendications précédentes, **caractérisé par le fait que** la concentration en bactéries lactiques déshydratées au sein des granules est supérieure ou égale à 1.10¹⁰ UFC par gramme de granules, et au maximum de 5.10¹¹ UFC par gramme de granules.

17. Produit alimentaire selon l'une quelconque des revendications précédentes, **caractérisé par le fait que** lesdites granules possèdent une activité en eau inférieure à 0,4.

18. Produit alimentaire selon l'une quelconque des revendications précédentes, **caractérisé par le fait que** la ou les matières grasses représentent de 40 à 75 % en poids par rapport au poids total des granules.

19. Produit alimentaire selon l'une quelconque des revendications précédentes, **caractérisé par le fait que** la concentration en bactéries lactiques enrobées est comprise entre 5.10⁶ et 5.10⁹ UFC par gramme de produit fini.

20. Produit alimentaire selon l'une quelconque des revendications précédentes, **caractérisé par le fait qu'**il contient au moins 90 % d'eau.

21. Produit alimentaire selon l'une quelconque des revendications précédentes, **caractérisé par le fait que** la quantité de granules de particules de bactéries lactiques déshydratées est inférieure à 2 % en poids par rapport au poids total de produit fini.

22. Produit alimentaire selon la revendication 21, **caractérisé par le fait que** la quantité de granules de particules de bactéries lactiques déshydratées est comprise entre 0,01 et 1 % en poids par rapport au poids total de produit fini.

## Claims

1. A liquid food product containing dehydrated lactic bacteria particles coated with at least one solid vegetable fatty material at ambient temperature, **characterised in that** the said coated bacteria are presented in the form of granules of average size between 95 and 300 µm enclosing lactic bacteria in a quantity greater than or equal to 1.10¹⁰ cfu per gram of granules, **in that** said granules are free of starch, and **in that** said food product has a pH that is lower than or equal to 4.5 and a water content by weight of at least 83%.

2. A food product according to claim 1, **characterised in that** the average size of the granules of lactic bacteria particles is less than 200 µm.

3. A food product according to claim 1 or 2, **characterised in that** the average size of the granules of lactic bacteria particles is between 150 and 200 µm.

4. A food product according to any one of the preceding claims, **characterised in that** it is presented in the form of a fermented milk or a drink.

5. A food product according to claim 4, **characterised in that** the drink is a fruit juice, a mixture of milk and fruit juice or a vegetable juice.

6. A food product according to any one of the preceding claims, **characterised in that** the lactic bacteria are selected from lactobacilli and bifidobacteria.

7. A food product according to claim 6, **characterised in that** the lactic bacteria are selected from among *Lactobacillus casei, Lactobacillus plantarum, Bifidobacterium animalis* and *Bifidobacterium breve .*

8. A food product according to claim 7, **characterised in that** the lactic bacterium is a *Lactobacillus casei* 1-1518.

9. A food product according to any one of the preceding claims, **characterised in that** the lactic bacteria are dehydrated by means of lyophilization prior to their granulation.

10. A food product according to claim 9, **characterised in that** the bacteria are treated with the aid of a lyoprotectant prior to their lyophilization.

11. A food product according to any one of the preceding claims, **characterised in that** the dehydrated bacteria particles have an average size between 80 and 150 µm.

12. A food product according to any one of the preceding claims, **characterised in that** the dehydrated bacteria particles have a water activity that is less than 0.25.

13. A food product according to any one of the preceding claims, **characterised in that** the vegetable fatty materials that are used to coat the dehydrated bacteria particles are selected from among substances that are hydrogenated and non-hydrogenated, fractionated or non-fractionated, esterified or non-esterified, food waxes, fatty acids and mixtures thereof.

14. A food product according to claim 13, **characterised in that** the vegetable fatty materials are selected from among stearic palm oil with a melting point (m.p.) = 35°C, palm oils with an m.p. of 45°C and 58°C, cocoa butter, peanut butter, palm-nut oil, hydrogenated copra with an m.p. = 32°C, carnauba wax with an m.p. = 80-85°C, microcrystalline wax of petroleum origin, stearic acid, palmitic acid, and mixtures thereof.

15. A food product according to claim 14, **characterised in that** the vegetable fatty materials that are used to coat the dehydrated bacteria particles are selected from among those that have a melting point that is higher than 40°C.

16. A food product according to any one of the preceding claims, **characterised in that** the concentration of dehydrated lactic bacteria within the granules is greater than or equal to 1.10¹⁰ cfu per gram of granules, and at the maximum 5.10¹¹ cfu per gram of granules.

17. A food product according to any one of the preceding claims, **characterised in that** said granules have a water activity that is less than 0.4.

18. A food product according to any one of the preceding claims, **characterised in that** the fatty material or materials represents/represent 40 to 75% by weight in relation to the total weight of the granules.

19. A food product according to any one of the preceding claims, **characterised in that** the concentration of coated lactic bacteria is between 5.10⁶ and 5.10⁹ cfu per gram of finished product.

20. A food product according to any one of the preceding claims, **characterised in that** it contains at least 90% water.

21. A food product according to any one of the preceding claims, **characterised in that** the quantity of granules of dehydrated lactic bacteria particles is less than 2% by weight in relation to the total weight of finished product.

22. A food product according to claim 21, **characterised in that** the quantity of granules of dehydrated lactic bacteria particles is between 0.01 and 1% by weight in relation to the total weight of finished product.

## Patentansprüche

1. Flüssiges Nahrungsmittelprodukt, das Partikel von dehydratisierten Milchsäurebakterien enthält, die mit wenigstens einem pflanzlichen Fett, das bei Umgebungstemperatur fest ist, überzogen sind, **dadurch gekennzeichnet, dass** die überzogenen Bakterien in Form von Körnern mit einer mittleren Größe von zwischen 95 und 300 µm vorliegen, welche Milchsäurebakterien in einer Menge von über oder gleich 1·10¹⁰ KbE pro Gramm Körner umfassen, dass die Körner frei von Stärke sind und dass das flüssige Nahrungsmittelprodukt einen pH von unter oder gleich 4,5 und einen Gewichtsgehalt an Wasser von wenigstens 83% aufweist.

2. Nahrungsmittelprodukt nach Anspruch 1, **dadurch gekennzeichnet, dass** die mittlere Größe der Körner der Partikel von Milchsäurebakterien unter 200 µm ist.

3. Nahrungsmittelprodukt nach Anspruch 1 oder 2, **dadurch gekennzeichnet, dass** die mittlere Größe der Körner der Partikel von Milchsäurebakterien zwischen 150 und 200 µm liegt.

4. Nahrungsmittelprodukt nach einem der vorangehenden Ansprüche, **dadurch gekennzeichnet, dass** es sich in Form einer fermentierten Milch oder eines Getränks präsentiert.

5. Nahrungsmittelprodukt nach Anspruch 4, **dadurch gekennzeichnet, dass** das Getränk ein Fruchtsaft, ein Gemisch aus Milch und Fruchtsaft oder ein Gemüsesaft ist.

6. Nahrungsmittelprodukt nach einem der vorangehenden Ansprüche, **dadurch gekennzeichnet , dass** die Milchsäurebakterien aus Lactobacilli und Bifidobakterien ausgewählt sind.

7. Nahrungsmittelprodukt nach Anspruch 6, **dadurch gekennzeichnet, dass** die Milchsäurebakterien aus *Lactobacillus casei, Lactobacillus plantarum, Bifidobacterium animalis* und *Bifidobacterium* breve ausgewählt sind.

8. Nahrungsmittelprodukt nach Anspruch 7, **dadurch gekennzeichnet, dass** das Milchsäurebakterium *Lactobacillus casei* 1-1518 ist.

9. Nahrungsmittelprodukt nach einem der vorangehenden Ansprüche, **dadurch gekennzeichnet , dass** die Milchsäurebakterien vor ihrer Granulierung durch Lyophilisierung dehydratisiert werden.

10. Nahrungsmittelprodukt nach Anspruch 9, **dadurch gekennzeichnet, dass** die Bakterien vor ihrer Lyophilisierung mit einem Lyoprotektionsmittel behandelt werden.

11. Nahrungsmittelprodukt nach einem der vorangehenden Ansprüche, **dadurch gekennzeichnet, dass** die Partikel von dehydratisierten Bakterien eine mittlere Größe zwischen 80 und 150 µm aufweisen.

12. Nahrungsmittelprodukt nach einem der vorangehenden Ansprüche, **dadurch gekennzeichnet, dass** die Partikel von dehydratisierten Bakterien eine Aktivität in Wasser von unter 0,25 aufweisen.

13. Nahrungsmittelprodukt nach einem der vorangehenden Ansprüche, **dadurch gekennzeichnet, dass** die pflanzlichen Fette, die verwendet werden, um die Partikel von dehydratisierten Bakterien zu überziehen, aus den hydrierten und nicht hydrierten, fraktionierten oder nicht fraktionierten, veresterten oder nicht veresterten Gruppen, den Nahrungsmittelwachsen, den Fettsäuren und ihren Gemischen ausgewählt sind.

14. Nahrungsmittelprodukt nach Anspruch 13, **dadurch gekennzeichnet, dass** die pflanzlichen Fette aus Palmöl mit hohem Stearinsäuregehalt mit einer Schmelztemperatur (temperature de fusion, TF) = 35°C, Palmölen mit TF 45°C und 58°C, Kakaobutter, Erdnussbutter, Palmkernöl, hydriertem Coprah-Öl mit TF = 32°C, Carnaubawachs mit TF = 80-85°C, mikrokristallinem Wachs aus Erdöl, Stearinsäure, Palmitinsäure und ihren Gemischen ausgewählt sind.

15. Nahrungsmittelprodukt nach Anspruch 14, **dadurch gekennzeichnet, dass** die pflanzlichen Fette, die verwendet werden, um die Partikel von dehydratisierten Bakterien zu überziehen, aus solchen ausgewählt sind, die einen Schmelzpunkt von über 40°C besitzen.

16. Nahrungsmittelprodukt nach einem der vorangehenden Ansprüche, **dadurch gekennzeichnet, dass** die Konzentration an dehydratisierten Milchsäurebakterien im Inneren der Körner über oder gleich 1·10¹⁰ KbE pro Gramm Körner und maximal 5·10¹¹ KbE pro Gramm Körner ist.

17. Nahrungsmittelprodukt nach einem der vorangehenden Ansprüche, **dadurch gekennzeichnet, dass** die Körner eine Aktivität in Wasser von unter 0,4 besitzen.

18. Nahrungsmittelprodukt nach einem der vorangehenden Ansprüche, **dadurch gekennzeichnet, dass** das Fett oder die Fette 40 bis 75 Gew.-%, bezogen auf das Gesamtgewicht der Körner, darstellt/darstellen.

19. Nahrungsmittelprodukt nach einem der vorangehenden Ansprüche, **dadurch gekennzeichnet, dass** die Konzentration an überzogenen Milchsäurebakterien zwischen 5·10⁶ und 5·10⁹ KbE pro Gramm des Endproduktes liegt.

20. Nahrungsmittelprodukt nach einem der vorangehenden Ansprüche, **dadurch gekennzeichnet, dass** es wenigstens 90% Wasser enthält.

21. Nahrungsmittelprodukt nach einem der vorangehenden Ansprüche, **dadurch gekennzeichnet, dass** die Menge der Körner der Partikel von dehydratisierten Milchsäurebakterien unter 2 Gew.-%, bezogen auf das Gesamtgewicht des Endprodukts, beträgt.

22. Nahrungsmittelprodukt nach Anspruch 21, **dadurch gekennzeichnet, dass** die Menge der Körner der Partikel von dehydratisierten Milchsäurebakterien zwischen 0,01 und 1 Gew.-%, bezogen auf das Gesamtgewicht des Endprodukts, liegt.
